# EUROPÄISCHE PATENTSCHRIFT

(11) **EP 2 322 952 B1**
(45) Veröffentlichungstag und Bekanntmachung des Hinweises auf die Patenterteilung: **30.08.2017**
(21) Anmeldenummer: 10013956.7
(22) Anmeldetag: 26.10.2010
(51) Int. Cl.: G01S 15/93, G01S 15/10, G01S 7/527

(54) **Verfahren zum Detektieren eines Objektes, Fahrerassistenzeinrichtung und Fahrzeug mit einer Fahrerassistenzeinrichtung**
Method for detecting an object, driver assistance device and vehicle with a driver assistance device
Procédé de détection d'un objet, dispositif d'assistance au conducteur et véhicule doté d'un dispositif d'assistance au conducteur

(30) Priorität: 16.11.2009 DE 102009053473
(43) Veröffentlichungstag der Anmeldung: 18.05.2011
(73) Patentinhaber: Valeo Schalter und Sensoren GmbH, 74321 Bietigheim-Bissingen (DE)
(72) Erfinder: Hallek, Michael, 71717 Beilstein (DE); Rostocki, Paul-David, 74177 Bad Friedrichshall (DE); Grüdl, Dietmar, 71679 Asperg (DE); Gotzig, Heinrich, 74357 Bönninheim (DE)

(56) Entgegenhaltungen:
- DE-A1- 10 356 797
- DE-A1-102004 006 015
- US-B1- 6 304 179

## Beschreibung

Die Erfindung betrifft ein Verfahren zum Detektieren eines Objektes mittels eines nach dem Echolaufzeitprinzip arbeitenden Sensors - zum Beispiel eines Ultraschallsensors - einer Fahrerassistenzeinrichtung. Es wird ein Sendesignal mit vorgegebener Amplitude durch den Sensor zu einem Sendezeitpunkt gesendet. Zu einem späteren Empfangszeitpunkt wird durch den Sensor ein Empfangssignal empfangen. Das Empfangssignal wird im Hinblick auf ein Erkennen eines Überschreitens einer vordefinierten unteren Schwelle durch eine Amplitude des Empfangssignals ausgewertet. Die Erfindung betrifft außerdem eine Fahrerassistenzeinrichtung für ein Fahrzeug sowie ein Fahrzeug mit einer Fahrerassistenzeinrichtung.

Ein Verfahren zum Detektieren von Objekten mit Hilfe eines Ultraschallsensors ist beispielsweise aus der Druckschrift DE 196 45 339 A1 bekannt. Es wird eine untere Schwelle für die Amplitude des Empfangssignals festgelegt. Ein zeitlicher Verlauf dieser Schwelle wird derart gestaltet, dass zwischen einem Echo einer Anhängerkupplung des Fahrzeugs und einem Bodenecho an dem Ultraschallsensor ankommende Echos erkannt werden können. Somit können dem Fahrer auch solche Objekte angezeigt werden, deren Echos zeitlich zwischen dem Echo der Anhängerkupplung und dem Bodenecho ankommen.

Ultraschallsensoren werden in heutigen Fahrzeugen beispielsweise für Einparkhilfesysteme verwendet. Die Laufzeit des Ultraschalls wird in einen Abstand zwischen dem Objekt und dem Ultraschallsensor umgerechnet, und der Abstand wird dem Fahrer als Information dargestellt. Jedoch empfangen die Ultraschallsensoren nicht nur das zuvor ausgesandte Sendesignal. Sie empfangen außerdem Signale anderer Quellen, welche Ultraschallwellen im Bereich der Eigenresonanzfrequenz des Ultraschallsensors aussenden. Im Gegenstand gemäß Druckschrift DE 196 45 339 A1 würden zum Beispiel dem Fahrer Objekte angezeigt werden, die tatsächlich nicht vorhanden sind. Die Amplitude eines durch eine externe Ultraschallwelle - also eine Störquelle - ausgesandten Signals liegt nämlich in der Regel oberhalb der festgelegten unteren Schwelle, insbesondere wenn sich dieses Signal zusätzlich mit einem Bodenecho überlagert. Dies kann dazu führen, dass ein Parkmanöver dem Fahrer aufgrund eines fälschlicherweise erkannten Objektes als unmöglich angezeigt wird, während das Parkmanöver tatsächlich problemlos durchgeführt werden kann.

Aus der DE 10 2004 006 015 A1 ist ein gattungsgemäßes Verfahren zum Detektieren eines Objektes mittels des nach dem Echolaufzeitprinzip arbeitenden Sensors bekannt. Dabei sendet der Sensor zu einem Sendezeitpunkt ein Sendesignal mit vorgegebener Amplitude aus, um dann ein Empfangssignal zu einem Empfangszeitpunkt zu empfangen und daraufhin auszuwerten, ob das Empfangssignal eine vordefinierte untere Schwelle überschreitet.

Des Weiteren ist aus der DE 103 56 797 A1 ein Verfahren zum Detektieren von Objekten mittels einer Laser-Radar-Sensoreinrichtung erkannt. Die Sensoreinrichtung arbeitet dabei nach dem Echolaufzeitprinzip, wobei zur Bestimmung des Objektabstandes das Empfangssignal mit einer oberen und einer unteren Schwelle verglichen wird.

US 6 304 179 B1 offenbart ein Insassenpositionsmesssystem umfassend einen Sender zum Erzeugen eines pulsmodulierten Sendesignals; ein Empfänger zum Empfangen einer Reflektion des Sendesignals, wobei der Empfänger einen relativ niedrigen Q Faktor hat; eine Steuereinheit, die auf den Empfang des reflektierten Signals reagiert und eine Indikation des Abstands zwischen einem Insassen und dem Sender erzeugt. Es kann ein zeitlich variabler Schwellwert verwendet werden.

Es ist Aufgabe der Erfindung, eine Lösung aufzuzeigen, wie reale Objekte durch einen nach dem Echolaufzeitprinzip arbeitenden Sensor besonders zuverlässig erkannt, insbesondere von Störquellen unterschieden, werden können.

Diese Aufgabe wird erfindungsgemäße durch ein Verfahren mit den Merkmalen gemäß Patentanspruch 1, durch eine Fahrerassistenzeinrichtung mit den Merkmalen gemäß Patentanspruch 10, wie auch durch ein Fahrzeug mit den Merkmalen gemäß Patentanspruch 11 gelöst. Vorteilhafte Ausführungen der Erfindung sind Gegenstand der abhängigen Patentansprüche und der Beschreibung.

Bei einem erfindungsgemäßen Verfahren wird ein Objekt mittels eines nach dem Echolaufzeitprinzip arbeitenden Sensors einer Fahrerassistenzeinrichtung detektiert. Der Sensor sendet zu einem Sendezeitpunkt ein Sendesignal mit vorgegebener Amplitude und empfängt zu einem späteren Empfangszeitpunkt ein Empfangssignal. Es erfolgt eine Auswertung des Empfangssignals im Hinblick auf ein Erkennen eines Überschreitens einer vordefinierten unteren Schwelle durch eine Amplitude des Empfangssignals. Das Empfangssignal wird dahingehend ausgewertet, ob seine Amplitude auch unterhalb einer von der Amplitude des Sendesignals abhängigen oberen Schwelle liegt. Das Empfangssignal wird dann als das von dem Objekt reflektierte Sendesignal zum Detektieren des Objekts erkannt, wenn die Amplitude des Empfangssignals zwischen den beiden Schwellen liegt, also zwischen der unteren Schwelle und der oberen Schwelle.

Also wird der erfindungsgemäße Effekt dadurch erzielt, dass eine obere Schwelle für die Amplitude des Empfangssignals festgelegt wird und das Objekt dann als ein reales Objekt detektiert wird, wenn die Amplitude des Empfangssignals einerseits oberhalb der unteren Schwelle und andererseits unterhalb der festgelegten oberen Schwelle liegt. Die Erfindung macht sich die Tatsache zu Nutze, dass reale Objekte das ausgesandte Sendesignal lediglich reflektieren, jedoch nicht verstärken können. Es ergibt sich daraus, dass die Amplitude des Empfangssignals maximal der Amplitude des Sendesignals entsprechen kann. Es ist somit physikalisch nicht möglich, dass beispielsweise ein Sendesignal vom Sensor ausgesendet wird, sich über eine gewisse Distanz zum Objekt hin und wieder zurück ausbreitet und dann mit annähernd gleicher oder höherer Energie wieder empfangen wird. Dies kann nur durch eine Störquelle verursacht werden. Es kann somit insbesondere zwischen realen Objekten - die das Sendesignal lediglich reflektieren - und in der Umgebung des Sensors befindlichen Störquellen unterschieden werden. Insbesondere bei der Anwendung des erfindungsgemäßen Verfahrens bei einem Einparkhilfesystem ergibt sich eine signifikante Verbesserung: Der Fahrer wird beim Durchführen eines Parkvorgangs nicht durch gegebenenfalls in der Umgebung des Fahrzeugs befindliche Störquellen gestört. Es können nämlich dem Fahrer nur solche Objekte angezeigt werden, die sich tatsächlich in der Umgebung des Fahrzeugs befinden und das Sendesignal reflektieren.

Die obere Schwelle für die Amplitude des Empfangssignals wird bevorzugt in einem Entwicklungsprozess des Sensors festgelegt, nämlich abhängig von der Amplitude des Sendesignals. Daten betreffend die obere Schwelle können zum Beispiel in einem Speicher der Fahrerassistenzeinrichtung abgelegt werden.

Vorzugsweise weist die obere Schwelle einen sich über der Zeit zwischen dem Sendezeitpunkt und dem Empfangszeitpunkt ändernden Verlauf auf. Insbesondere ist dieser zeitliche Verlauf der oberen Schwelle ein über der Zeit zwischen dem Sendezeitpunkt und dem Empfangszeitpunkt abfallender Verlauf. Diese Ausführungsform baut auf der Tatsache auf, dass sich die Amplitude des Empfangssignals bei weiter entfernten Objekten aufgrund der Dämpfung des Signals im Ausbreitungsmedium verringert. Für jeden Zeitpunkt nach dem Sendezeitpunkt kann somit eine maximal mögliche Amplitude des Empfangssignals und hierdurch auch die obere Schwelle festgelegt werden. Diese maximale Amplitude, welche das Empfangssignal zum Empfangszeitpunkt aufweisen kann, hängt also von der Zeitdauer zwischen dem Sendezeitpunkt und dem Empfangszeitpunkt ab. Unabhängig von der Entfernung des Objektes zum Sensor kann somit zwischen einem realen Objekt und einer Störquelle zuverlässig unterschieden werden, und in der Umgebung des Sensors befindliche Objekte können mit höchster Genauigkeit detektiert werden.

Beim Festlegen der oberen Schwelle wird vorzugsweise die Frequenz des Sendesignals berücksichtigt. Mit der Frequenz des Sendesignals ändern sich nämlich auch die Dämpfungseigenschaften des Signals im Ausbreitungsmedium; die Dämpfung ist abhängig von der Frequenz des Sendesignals. Je nach Frequenz des Sendesignals kann somit der zeitliche Verlauf der oberen Schwelle jeweils optimal festgelegt werden.

In einer Ausführungsform wird beim Festlegen der oberen Schwelle die Dämpfung des Sendesignals in seinem Ausbreitungsmedium selbst berücksichtigt. Wird das Verfahren auf einen Ultraschallsensor angewandt, so weist die Luft - das Ausbreitungsmedium - eine stark mit der Frequenz des Sendesignals steigende Dämpfung auf. Diese Dämpfung des Sendesignals steigt auch mit dem Ausbreitungsweg des Sendesignals bzw. mit der Zeitdauer zwischen dem Sendezeitpunkt und dem Empfangszeitpunkt an, so dass sich die Amplitude des Empfangssignals mit dem Ausbreitungsweg bzw. mit der Zeitdauer verringert. Die Berücksichtigung der Dämpfung des Sendesignals im Ausbreitungsmedium ermöglicht also ein genaues Festlegen der oberen Schwelle für die Amplitude des Empfangssignals. Es hat sich dabei als besonders vorteilhaft herausgestellt, wenn der zeitliche Verlauf der oberen Schwelle entsprechend der Form eines (umgekehrten) zeitlichen Verlaufs der theoretischen Dämpfung des Sendesignals im Ausbreitungsmedium festgelegt wird. Somit kann die obere Schwelle einen mit der Zeit nach dem Sendezeitpunkt relativ stark abfallenden Verlauf aufweisen. Durch das Festelegen des zeitlichen Verlaufs der oberen Schwelle gemäß dem Verlauf der Dämpfung wird gewährleistet, dass zu jedem Zeitpunkt nach dem Sendezeitpunkt die obere Schwelle der zu diesem Zeitpunkt möglichen maximalen Amplitude des Empfangssignals entspricht.

Zum Sendezeitpunkt kann der Wert der oberen Schwelle gleich der Amplitude des Sendesignals sein.

Der zeitliche Verlauf der oberen Schwelle ab dem Sendezeitpunkt kann auch unter Berücksichtigung von Verlusten aufgrund einer Reflektion des Sendesignals an einem Objekt festgelegt werden. Die Amplitude des Empfangssignals hängt nämlich nicht nur von der Dämpfung des Sendesignals im Ausbreitungsraum ab, sondern ist auch von den Reflektionseigenschaften der Objekte abhängig. Allgemein gilt, dass aufgrund einer Reflektion an einem realen Objekt Verluste entstehen. Diese können beim Festlegen des zeitlichen Verlaufs der oberen Schwelle zum Beispiel in der Form eines Offsets berücksichtigt werden. Durch das Berücksichtigen der Verluste aufgrund der Reflektion kann der Verlauf der oberen Schwelle plausibilisiert werden, und es können hochgenaue Messungen erzielt werden.

Wie bereits ausgeführt, kann bei dem Verfahren zwischen einem realen Objekt und einer Störquelle unterschieden werden. Es kann jedoch vorkommen, dass auch eine Störquelle ein Signal aussendet, dessen Amplitude zwischen der unteren Schwelle und der oberen Schwelle liegt. Dies stellt eine unerwünschte Situation dar. Dieser Problematik begegnet die nachfolgend beschriebene Ausführungsform:
Der Sensor kann zumindest zwei Sendesignale nacheinander senden und zu jedem Sendesignal ein Empfangssignal empfangen. Die Empfangssignale werden bevorzugt als die von demselben Objekt reflektierten Sendesignale zum Detektieren dieses Objektes dann erkannt, wenn ein auf eine Differenz zwischen Amplituden der Empfangssignale bezogenes vorbestimmtes Differenzkriterium erfüllt ist. Dieses Differenzkriterium kann beinhalten, dass die Differenz zwischen den Amplituden der Empfangssignale unterhalb eines vorbestimmten Referenzwertes liegt. Diese Ausführungsform stellt eine Plausibilisierung der Erkennung eines realen Objektes dar. Handel es sich nämlich bei dem Empfangssignal um ein von einer Störquelle ausgesandtes Signal, so schwankt die Amplitude des Empfangssignals sehr stark. Auf dieser Erkenntnis beruhend kann nun der Referenzwert für die Differenz zwischen den Amplituden der Empfangssignale so gewählt werden, dass es möglich ist, zwischen einer Störquelle und einem realen Objekt zu unterscheiden. Sind die Amplituden der Empfangssignale gleich oder zumindest annähernd gleich - die Differenz zwischen den Amplituden ist sehr klein -, so stellt dies ein Indiz dafür dar, dass es sich um ein reales Objekt und nicht um eine Störquelle handelt. Dieses Verfahren kann weiterhin plausibilisiert werden, indem mehrere Sendesignale nacheinander gesendet und zu jedem Signal ein Empfangssignal empfangen wird. Dann kann jeweils eine Differenz zwischen der Amplitude eines jeden Empfangssignals und der Amplitude eines diesem Empfangssignal folgenden Empfangssignals ermittelt werden. Das Differenzkriterium kann dann beinhalten, dass eine vorbestimmte Anzahl von Differenzen - insbesondere alle Differenzen - unterhalb des vorbestimmten Referenzwertes liegen. Dann kann nämlich mit höchster Wahrscheinlichkeit ein Rückschluss darauf gezogen werden, dass die Empfangssignale die an einem realen Objekt reflektierten Sendesignale sind.

Die Zeitdauer zwischen den Sendezeitpunkten, zu denen die zumindest zwei Sendesignale gesendet werden, wird möglichst klein gewählt. Das zweite und jedes weitere Sendesignal wird jedoch bevorzugt erst dann gesendet, wenn das dem vorausgesendeten Sendesignal zugeordnete Empfangssignal bereits empfangen wurden. Somit können Mehrdeutigkeiten ausgeschlossen werden. Der zeitliche Abstand zwischen den jeweiligen Sendezeitpunkten kann beispielsweise in einem Wertebereich von 20 ms bis 200 ms, bevorzugt in einem Wertebereich von 50 ms bis 150 ms, liegen. Zum Beispiel kann dieser zeitliche Abstand 100 ms betragen. Durch die Wahl eines solchen kurzen zeitlichen Abstandes zwischen den jeweiligen Sendezeitpunkten wird erreicht, dass die in der Umgebung des Sensors herrschenden Bedienungen bzw. die Umgebungsverhältnisse für alle Messungen quasi konstant bleiben und somit sehr genaue Messungen erzielt werden können.

Es kann vorkommen, dass das ausgesandte Sendesignal von einem Objekt nicht nur an einer bestimmten Stelle, sondern an vielen Stellen reflektiert wird. Die Amplitude des reflektierten Signals hängt dann von der Position des Objektes bezüglich des Sensors ab, wie auch von den Objekteigenschaften selbst. In einem solchen Fall beinhaltet das Empfangssignal eine zeitliche Folge von Impulsen, während lediglich ein einziges Sendesignal ausgesendet wurde. In einer Ausführungsform wird dann, wenn das Empfangssignal - zu einem einzigen Sendesignal - eine zeitliche Folge von Impulsen umfasst, eine obere Zusatzschwelle für einen zweiten und jeden weiteren Impuls der Folge von Impulsen abhängig von einer erfassten Amplitude eines ersten Impulses der Folge von Impulsen festgelegt. Diese Ausführungsform beruht auf der Erkenntnis, dass die Hüllkurve einer solchen Folge von Impulsen entweder eine konstante Funktion oder eine leicht abfallende Funktion beschreibt. Somit ist es beispielsweise nicht möglich, dass zum Beispiel ein dritter Impuls der Folge von Impulsen eine höhere Amplitude als die übrigen Impulse aufweist. Ist dies der Fall, so handelt es sich nicht lediglich um ein einziges Objekt, sondern um mehrere Objekte oder um ein Objekt und eine Störquelle. Die obere Zusatzschwelle kann also entweder einen über der Zeit ab dem Zeitpunkt des Empfangens des ersten Impulses konstanten Verlauf oder ein über der Zeit leicht abfallenden Verlauf aufweisen. Zu Beginn ihres Verlaufs entspricht die obere Zusatzschwelle bevorzugt der Amplitude des ersten Impulses der Folge von Impulsen oder einer Summe dieser Amplitude und eines Offsets. Durch das Festlegen der Zusatzschwelle wird das Verfahren weiterhin plausibilisiert, und es können gleichzeitig ein reales Objekt und eine Störquelle oder gleichzeitig zwei reale Objekte erkannt werden.

Die obere Zusatzschwelle wird bevorzugt in Echtzeit, also jeweil nach Empfang des ersten Impulses unmittelbar festgelegt.

Die Folge von Impulsen wird bevorzugt als das von demselben Objekt reflektierte Sendesignal zum Detektieren dieses Objektes dann erkannt, wenn ein auf den zweiten und jeden weiteren Impuls bezogenes vorbestimmtes Detektionskriterium erfüllt ist. Dieses Detektionskriterium kann beinhalten, dass die Amplitude des zweiten und jedes weiteren Impulses unterhalb der oberen Zusatzschwelle liegt. Ist das Detektionskritierum erfüllt, so handelt es sich bei der Folge von Impulsen um das von einem einzigen Objekt reflektierte Sendesignal. Überschreitet ein Impuls der Folge von Impulsen die obere Zusatzschwelle, so handelt es sich bei diesem Impuls um das Signal einer Störquelle. Auf diesem Wege gelingt es, gleichzeitig ein reales Objekt sowie eine Störquelle zu detektieren.

Es ist bevorzugt ein Ultraschallsensor, auf welchen das Verfahren angewandt wird.

Eine erfindungsgemäße Fahrerassistenzeinrichtung - insbesondere ein Parkhilfesystem - für ein Fahrzeug umfasst einen nach dem Echolaufzeitprinzip arbeitenden Sensor zum Senden eines Sendesignals vorgegebener Amplitude zu einem Sendezeitpunkt und zum Empfangen eines Empfangssignals zu einem späteren Empfangszeitpunkt. Die Fahrerassistenzeinrichtung umfasst außerdem eine Signalverarbeitungseinheit zum Auswerten des Empfangssignals im Hinblick auf ein Erkennen eines Überschreitens einer vordefinierten unteren Schwelle durch eine Amplitude des Empfangssignals. Die Signalverarbeitungseinheit kann das Empfangssignal dahingehend auswerten, ob seine Amplitude unterhalb einer von der Amplitude des Sendesignals abhängigen oberen Schwelle liegt. Die Signalverarbeitungseinheit erkennt das Empfangssignal als das von dem Objekt reflektierte Sendesignal zum Detektieren des Objekts dann, wenn die Amplitude des Empfangssignals zwischen den beiden Schwellen liegt.

Ein erfindungsgemäßes Fahrzeug, insbesondere ein Kraftwagen, umfasst eine erfindungsgemäße Fahrerassistenzeinrichtung. Die mit Bezug auf das erfindungsgemäße Verfahren vorgestellten bevorzugten Ausführungsformen und deren Vorteile geltend entsprechend für die erfindungsgemäße Fahrerassistenzeinrichtung sowie für das erfindungsgemäße Fahrzeug.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweiliges angegebenen Kombination, sondern auch in anderen Kombinationen oder in Alleinstellung verwendbar.

Die Erfindung wird nun anhand einzelner bevorzugter Ausführungsbeispiele näher erläutert, wie auch unter Bezugnahme auf die beigefügten Zeichnungen. Es zeigen:
- Fig. 1 bis Fig. 3: jeweils zeitliche Verläufe eines Sendesignals und eines Empfangssignals eines Ultraschallsensors, wobei ein Verfahren gemäß einer Ausführungsform der Erfindung näher erläutert wird;
- Fig. 4 und Fig. 5: jeweils einen zeitlichen Verlauf eines Sendesignals und eines eine Folge von Impulsen aufweisenden Empfangssignals, wobei ein Verfahren gemäß einer weiteren Ausführungsform der Erfindung näher erläutert wird; und
- Fig. 6a bis 6c: jeweils einen zeitlichen Verlauf eines Empfangssignals, welches jeweils einem separaten Sendesignal zugeordnet ist, wobei ein Verfahren gemäß einer noch weiteren Ausführungsform der Erfindung näher erläutert wird.

Es ist im Ausführungsführungsbeispiel eine Fahrerassistenzeinrichtung für ein Fahrzeug gegeben, welche einen Sensor aufweist. Der Sensor ist im Ausführungsbeispiel ein Ultraschallsensor und kann ein Sendesignal - Ultraschall - senden und ein Empfangssignal - ebenfalls ein Ultraschall - empfangen. Die Fahrerassistenzeinrichtung ist in einen Personenkraftwagen eingebaut und kann zum Beispiel ein Einparkhilfesystem sein. Die Fahrerassistenzeinrichtung kann auch mehrere Ultraschallsensoren aufweisen, wobei dann das nachfolgend beschriebene Verfahren auf jeden Sensor separat angewandt werden kann.

In den Figuren ist auf der jeweiligen y-Achse eine Amplitude A aufgetragen; auf der jeweiligen x-Achse ist die Zeit t aufgetragen.

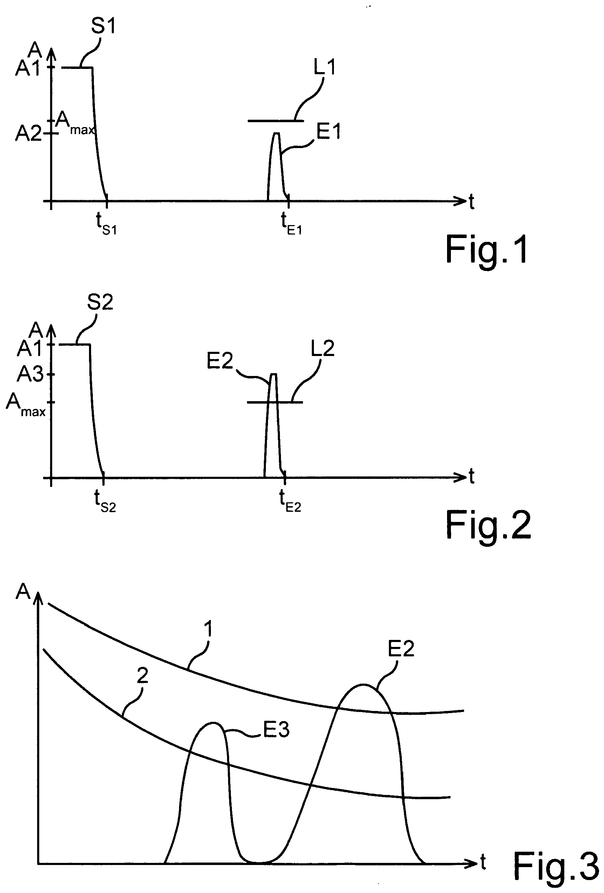

Bezug nehmend auf Fig. 1 sendet der Sensor ein Sendesignal S1 zu einem Sendezeitpunkt t_{S1}. Die Amplitude A des Sendesignals S1 beträgt A1. Zu einem Empfangszeitpunkt t_{E1} empfängt der Sensor ein Empfangssignal E1, welches die Form eines Impulses aufweist.

Die Amplitude A des Empfangssignals E1 beträgt A2. Durch die Fahrerassistenzeinrichtung, nämlich beispielsweise durch eine Signalverarbeitungseinheit, wird abhängig von einer Zeitdauer zwischen dem Sendezeitpunkt t_{S1} und dem Empfangszeitpunkt t_{E1} eine Entfernung zwischen dem Sensor und einem Objekt bestimmt, von welchem das Sendesignal S1 reflektiert wurde. Nachfolgend wird ein Verfahren beschrieben, welches die Unterscheidung zwischen einem realen Objekt - welches das Sendesignal S1 lediglich reflektiert - und einer Störquelle - die einen zusätzlichen Ultraschall aussendet - ermöglicht. Reale Objekte können das Sendesignal S1 lediglich reflektieren, jedoch nicht verstärken. Es gilt somit die Beziehung, dass die Amplitude A2 des Empfangssignals E1 maximal der Amplitude A1 des Sendesignals S1 entsprechen kann. Mit der Zeit t bzw. mit der Entfernung des Objektes vom Sensor verringert sich die maximal mögliche Amplitude aufgrund der Dämpfung im Ausbreitungsmedium, vorliegend in der Luft. In Fig. 1 ist für den Empfangszeitpunkt t_{E1} eine für diesen Zeitpunkt maximal mögliche Amplitude Aₘₐₓ durch eine Linie L1 dargestellt. Es ergibt sich aus Fig. 1, dass die Amplitude A2 des Empfangssignals E1 unterhalb der maximalen Amplitude Aₘₐₓ liegt. Das Empfangssignal E1 ist somit das von einem realen Objekt reflektierte Sendesignal S1 und somit auf ein reales Objekt zurückzuführen.

Bezug nehmend nun auf Fig. 2 sendet der Sensor ein Sendesignal S2, nämlich zu einem Sendezeitpunkt t_{S2}. Der Sensor empfängt ein Empfangssignal E2, dies zu einem Empfangszeitpunkt t_{E2}. Das Sendesignal S2 weist nach wie vor eine Amplitude A1 auf. Auf der Höhe einer für den Empfangszeitpunkt t_{E2} maximal möglichen Amplitude Aₘₐₓ des Empfangssignals E2 ist zur Orientierung eine Gerade L2 eingezeichnet. Das Empfangssignal E2 weist eine Amplitude A3 auf. In Fig. 2 ist eine solche Situation dargestellt, bei welcher die Amplitude A3 des Empfangssignals E2 größer als die für den Empfangszeitpunkt t_{E2} mögliche maximale Amplitude Aₘₐₓ ist. Eine solche Überschreitung der maximal möglichen Amplitude Aₘₐₓ durch die Amplitude A des Empfangssignals E2 kann nur durch eine Störquelle verursacht worden sein. Die Fahrerassistenzeinrichtung erkennt also in einem solchen Fall, dass es sich hierbei um kein reales Objekt, sondern um eine Störquelle handelt.

Also ist die maximal mögliche Amplitude, die das Empfangssignal E1, E2 aufweisen kann, jeweils abhängig von dem Empfangszeitpunkt t_{E1}, t_{E2} bezogen auf den jeweiligen Sendezeitpunkt t_{S1}, t_{S2}. In der Fahrerassistenzeinrichtung ist somit eine obere Schwelle festgelegt, die einen sich über der Zeit t ab dem jeweiligen Sendezeitpunkt t_{S1}, t_{S2} ändernden Verlauf aufweist. Dieser ist in Fig. 3 mit 1 bezeichnet. Der zeitliche Verlauf 1 der oberen Schwelle für die Amplitude A des Empfangssignals E1, E2 wird in der Fahrerassistenzeinrichtung - nämlich zum Beispiel in einem Speicher - im Entwicklungsprozess abgelegt. Beim Festlegen des zeitlichen Verlaufs 1 der oberen Schwelle können zumindest folgende Größen berücksichtigt werden:
- die Frequenz des Sendesignals S1, S2,
- die Dämpfung des Sendesignals S1, S2 im Ausbreitungsmedium, und
- Verluste aufgrund einer Reflektion des Sendesignals S1, S2 an einem Objekt.

Wie aus Fig. 3 hervorgeht, fällt der zeitliche Verlauf 1 der oberen Schwelle mit der Zeit t ab. Dies ist darauf zurückzuführen, dass die Dämpfung des Sendesignals S1, S2 mit dem Ausbreitungsweg bzw. mit der Zeit t entsprechend größer wird. Der Verlauf 1 kann somit entsprechend einem Verlauf der Dämpfung über der Zeit t bzw. über dem Ausbreitungsweg festgelegt werden, und genauer gesagt entsprechend einem umgekehrten Verlauf der Dämpfung.

Zum jeweiligen Sendezeitpunkt t_{S1}, t_{S2} kann die obere Schwelle der Amplitude A des jeweiligen Sendesignals S1, S2 entsprechen.

In Fig. 3 ist außerdem ein zeitlicher Verlauf 2 einer unteren Schwelle eingezeichnet. Die untere Schwelle hat die Bedeutung, dass reale Objekte nur dann erkannt werden, wenn die Amplitude A des Empfangssignals E1, E2 diese Schwelle überschreitet. Dies bedeutet, dass ein reales Objekt dann erkannt wird, wenn die Amplitude A des Empfangssignals E1, E2 zwischen der unteren Schwelle und der oberen Schwelle, d. h. zwischen den Verläufen 1, 2 liegt.

In Fig. 3 sind zwei beispielhafte Empfangssignal E3, E4 eingezeichnet. Die Empfangssignale E3, E4 sind jeweils einem anderen Sendesignal S1, S2 (in Fig. 3 nicht abgebildet) zuzuordnen. Die Amplitude A des Empfangssignals E3 liegt zwischen der unteren und der oberen Schwelle. Die Fahrerassistenzeinrichtung erkennt in diesem Fall ein reales Objekt und zeigt es dem Fahrer an. Die Amplitude A des Empfangssignals E4 überschreitet die obere Schwelle. Das Empfangssignal E4 ist somit auf eine Störquelle zurückzuführen, so dass die Anzeige an den Fahrer unterbleibt.

Ganz allgemein lässt sich also anhand eines Verhältnisses der Amplitude A1 des Sendesignals S1, S2 zur Amplitude A des Empfangssignals E1 bis E4 eine Aussage über die Art des Objektes treffen, d. h. die Objekte können anhand dieses Verhältnisses klassifiziert werden. Es kann dabei zwischen sehr stark reflektierenden Objekten, schwach reflektierenden Objekten, wie auch Störquellen unterschieden werden.

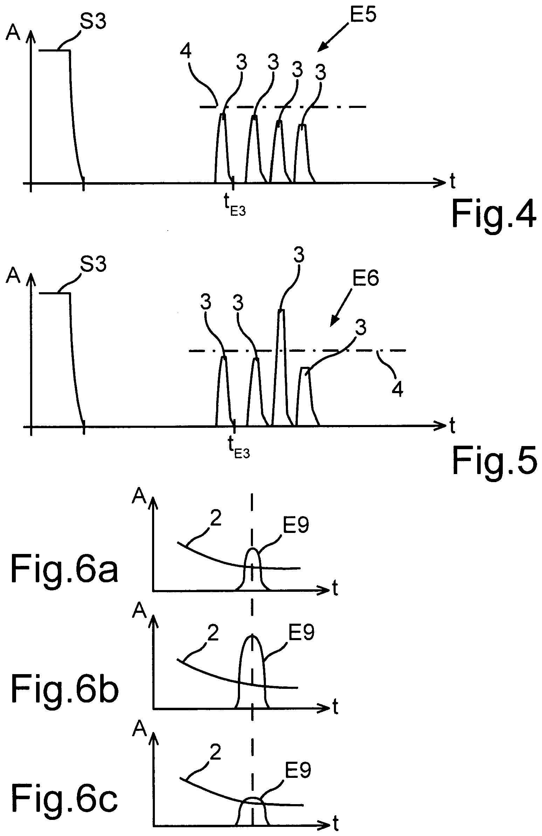

In den Fig. 4 und 5 ist ein solches Szenario dargestellt, bei welchem zu einem einzigen Sendesignal S3 respektive S4 das jeweilige Empfangssignal E5 respektive E6 jeweils eine zeitliche Abfolge von Impulsen 3 umfasst. Die Sendesignale S3, S4 werden nämlich von einem Objekt nicht nur an einer Stelle, sondern an mehreren Stellen reflektiert. Das Sendesignal S3, S4 wird somit in mehrere Teile zerlegt und gelangt somit zum Sensor zu unterschiedlichen Zeitpunkten, nämlich in Form von Impulsen 3. Es hat sich herausgestellt, dass bei einem realen Objekt - auch bei einem einzelnen Objekt - die Amplitude A des zweiten und jedes weiteren Impulses 3 gleich der Amplitude A des ersten Impulses 3 oder geringer als diese Amplitude A ist. In der Fahrerassistenzeinrichtung wird somit eine obere Zusatzschwelle definiert - diesmal in Echtzeit - d. h. unmittelbar nach dem Empfangen des ersten Impulses 3. Es sind hier prinzipiell zwei Ausführungsformen sinnvoll möglich: Die obere Zusatzschwelle kann einen über der Zeit t ab einem Empfangszeitpunkt t_{E3} des ersten Impulses 3 konstanten Verlauf 4 aufweisen, wie dies in den Fig. 4 und 5 durch die jeweilige gestrichelte Gerade schematisch dargestellt ist. Dann kann der Wert der oberen Zusatzschwelle beispielsweise der Amplitude A des ersten Impulses 3 zuzüglich eines Offsets entsprechen. Gemäß einer Alternative kann die obere Zusatzschwelle einen über der Zeit t nach dem Empfangszeitpunkt t_{E3} leicht abfallenden Verlauf 4 aufweisen.

Im Ausführungsbeispiel gemäß Fig. 4 sind die Amplituden A des zweiten und jedes weiteren Impulses 3 kleiner als die obere Zusatzschwelle. Dies bedeutet, dass das Empfangssignal E5 auf ein einziges reales Objekt zurückzuführen ist. Das Empfangssignal E5 bzw. die in Fig. 4 dargestellten Impulse 3 stellen somit das von einem realen Objekt reflektierte Sendesignal S3 dar.

Demgegenüber ist im Ausführungsbeispiel gemäß Fig. 5 die Amplitude A des dritten Impulses 3 größer als die obere Zusatzschwelle. Die Amplitude A des zweiten Impulses 3, wie auch die des vierten Impulses 3 überschreitet jedoch die obere Zusatzschwelle nicht. Dies bedeutet, dass der dritte Impuls 3 nicht auf dasselbe Objekt zurückzuführen ist, wie die übrigen Impulse 3. Im Ausführungsbeispiel gemäß Fig. 5 wird somit außer einem realen Objekt entweder ein weiteres reales Objekt oder eine Störquelle detektiert. Ob es sich bei dem weiteren Objekt um ein reales Objekt oder auch um eine Störquelle handelt, kann durch das Verfahren gemäß den Fig. 1 bis 3 verifiziert werden.

Möglich sind auch solche Szenarien, bei denen die Amplitude eines von einer Störquelle ausgesandten Signals zwischen der unteren Schwelle und der oberen Schwelle gemäß Fig. 3 liegt. Nachfolgend wird ein Verfahren näher beschrieben, welches eine weitere Plausibilierung des Verfahrens gemäß Fig. 3 darstellt und auch bei solchen Szenarien eine zuverlässige Unterscheidung zwischen einer Störquelle und einem realen Objekt ermöglicht.

In den Fig. 6a bis 6c sind Ergebnisse von drei zeitlich aufeinander folgenden Messungen mit demselben Ultraschallsensor und bei denselben Messbedienungen gezeigt. Dargestellt sind in den Fig. 6a bis 6c die jeweiligen Empfangssignale E7, E8, E9, wie auch der Verlauf 2 der unteren Schwelle (vgl. Fig. 3). Die Empfangssignale E7, E8, E9 stellen jeweils ein Bodenecho mit einem überlagerten Störsignal einer Störquelle dar. Grundsätzlich verbliebt die Amplitude A des Bodenechos üblicherweise unterhalb der unteren Schwelle; aufgrund des Störsignals der Störquelle überschreitet die jeweilige Amplitude A der Empfangssignal E7, E8, E9 die untere Schwelle. Es handelt sich jedoch nicht um ein reales Objekt. Um nun in einem solchen Fall zwischen einem realen Objekt und einer Störquelle unterscheiden zu können, werden die Differenzen zwischen den Amplituden A der Empfangssignale E7, E8, E9 betrachtet. Und zwar wird eine Differenz zwischen der Amplitude A des Empfangssignals E7 und der des Empfangssignals E8 betrachtet, wie auch die Differenz zwischen den Amplituden A der Empfangssignale E8 und E9. Wie aus den Fig. 6a bis 6c hervorgeht, schwankt die Amplitude A der Empfangssignale E7, E8, E9 über die Messungen sehr stark. Ein reales Objekt zeigt keine solchen Schwankungen, sondern liefert annähernd stabilen Amplitudenverlauf.

Die Unterscheidung zwischen einer Störquelle und einem realen Objekt kann zum Beispiel wie folgt erfolgen: Die einzelnen Messungen - die Empfangssignale E7, E8, E9 sind jeweils einem separaten Sendesignal zugeordnet - werden in vorbestimmten Zeitabständen durchgeführt, nämlich beispielsweise alle 100 ms. Treffen die Empfangssignale E7 und E8 beim Sensor an, so wird in der Fahrerassistenzeinrichtung eine Differenz zwischen den Amplituden A dieser Empfangssignale E7, E8 berechnet. Es wird überprüft, ob diese Differenz kleiner als ein vorgegebener Referenzwert ist. Nach dem Empfang des dritten Empfangssignals E9 wird die Differenz zwischen den Amplituden der Empfangssignale E8, E9 berechnet. Es wird ebenfalls überprüft, ob diese Differenz den vorgegebenen Referenzwert überschreitet. Überschreiten die beiden Differenzen den Referenzwert - wenn die Amplituden A der Empfangssignale E7, E8, E9 sehr stark schwanken - so erkennt die Fahrerassistenzeinrichtung, dass es sich bei dem Objekt um eine Störquelle handelt. Ist der Amplitudenverlauf stabil - etwa wenn zumindest eine Differenz den Differenzwert nicht überschreitet - so stellt die Fahrerassistenzeinrichtung fest, dass es sich um ein reales Objekt handelt, welches dem Fahrer angezeigt werden kann.

## Patentansprüche

1. Verfahren zum Detektieren eines Objektes mittels eines nach dem Echolaufzeitprinzip arbeitenden Sensors einer Fahrerassistenzeinrichtung, mit den Schritten:
- Senden eines Sendesignals (S1, S2, S3, S4) mit vorgegebener Amplitude (A1) und Frequenz durch den Sensor zu einem Sendezeitpunkt (t_{S1}, t_{S2}),
- Empfangen eines Empfangssignals (E1 bis E9) durch den Sensor zu einem späteren Empfangszeitpunkt (t_{E1}, t_{E2}, t_{E3}), und
- Auswerten des Empfangssignals (E1 bis E9) im Hinblick auf ein Erkennen eines Überschreitens einer vordefinierten unteren Schwelle (2) durch eine Amplitude (A2, A3) des Empfangssignals (E1 bis E9),
wobei
das Empfangssignal (E1 bis E9) dahingehend ausgewertet wird, ob seine Amplitude (A2, A3) unterhalb einer von der Amplitude (A1) des Sendesignals (S1, S2, S3, S4) abhängigen oberen Schwelle (1, L1, Aₘₐₓ) liegt, wobei das Empfangssignal (E1 bis E9) als das von dem Objekt reflektierte Sendesignal (S1, S2, S3, S4) zum Detektieren des Objekts dann erkannt wird, wenn die Amplitude (A2, A3) des Empfangssignals (E1 bis E9) zwischen den beiden Schwellen (1, 2) liegt und wobei die obere Schwelle (1) einen sich über der Zeit zwischen dem Sendezeitpunkt (t_{S1}, t_{S2}) und dem Empfangszeitpunkt (t_{E1}, t_{E2}, t_{E3}) ändernden Verlauf (1) aufweist, **dadurch gekennzeichnet, dass**
ein zeitlicher Verlauf (1) der oberen Schwelle ab dem Sendezeitpunkt (t_{S1}, t_{S2}) abhängig von der Frequenz des Sendesignals (S1, S2, S3, S4) festgelegt wird.

2. Verfahren nach Anspruch 1,
**dadurch gekennzeichnet, dass**
die obere Schwelle (1) einen ab dem Sendezeitpunkt (t_{S1}, t_{S2}) abfallenden Verlauf (1) aufweist.

3. Verfahren nach einem der vorhergehenden Ansprüche,
**dadurch gekennzeichnet, dass**
ein zeitlicher Verlauf (1) der oberen Schwelle ab dem Sendezeitpunkt (t_{S1}, t_{S2}) abhängig von einer Dämpfung des Sendesignals (S1, S2, S3, S4) in seinem Ausbreitungsmedium festgelegt wird.

4. Verfahren nach Anspruch 3,
**dadurch gekennzeichnet, dass**
der zeitliche Verlauf (1) der oberen Schwelle ab dem Sendezeitpunkt (t_{S1}, t_{S2}) entsprechend der Form eines zeitlichen Verlaufs der Dämpfung festgelegt wird.

5. Verfahren nach einem der vorhergehenden Ansprüche,
**dadurch gekennzeichnet, dass**
ein zeitlicher Verlauf (1) der oberen Schwelle ab dem Sendezeitpunkt (t_{S1}, t_{S2}) unter Berücksichtigung von Verlusten aufgrund einer Reflektion des Sendesignals (S1, S2, S3, S4) an einem Objekt festgelegt wird.

6. Verfahren nach einem der vorhergehenden Ansprüche,
**dadurch gekennzeichnet, dass**
zumindest zwei Sendesignale nacheinander gesendet und zu jedem Sendesignal ein Empfangssignal (E7, E8, E9) durch den Sensor empfangen werden, wobei die Empfangssignale (E7, E8, E9) als die von demselben Objekt reflektierten Sendesignale zum Detektieren des Objekts dann erkannt werden, wenn ein auf eine Differenz zwischen Amplituden (A) der Empfangssignale (E7, E8, E9) bezogenes vorbestimmtes Differenzkriterium erfüllt ist, welches umfasst, dass die Differenz unterhalb eines vorbestimmten Referenzwertes liegt.

7. Verfahren nach einem der vorhergehenden Ansprüche,
**dadurch gekennzeichnet, dass**
dann, wenn das Empfangssignal (E1 bis E9) eine zeitliche Folge von Impulsen (3) umfasst, eine obere Zusatzschwelle (4) für einen zweiten und jeden weiteren Impuls (3) der Folge von Impulsen (3) abhängig von einer erfassten Amplitude (A) eines ersten Impulses (3) der Folge von Impulsen (3) festgelegt wird.

8. Verfahren nach Anspruch 7,
**dadurch gekennzeichnet, dass**
die Folge von Impulsen (3) als das von demselben Objekt reflektierte Sendesignal (S1, S2, S3, S4) zum Detektieren dieses Objekts dann erkannt wird, wenn ein auf den zweiten und jeden weiteren Impuls (3) bezogenes vorbestimmtes Detektionskriterium erfüllt ist, welches umfasst, dass die Amplitude (A) des zweiten und jedes weiteren Impulses (3) unterhalb der oberen Zusatzschwelle (4) liegt.

9. Verfahren nach einem der vorhergehenden Ansprüche,
**dadurch gekennzeichnet, dass**
der Sensor ein Ultraschallsensor ist.

10. Fahrerassistenzeinrichtung für ein Fahrzeug, mit:
- einem nach dem Echolaufzeitprinzip arbeitenden Sensor zum Senden eines Sendesignals (S1, S2, S3, S4) vorgegebener Amplitude (A1) und Frequenz zu einem Sendezeitpunkt (t_{S1}, t_{S2}) und zum Empfangen eines Empfangssignals (E1 bis E9) zu einem späteren Empfangszeitpunkt (t_{E1}, t_{E2}, t_{E3}), und
- einer Signalverarbeitungseinheit zum Auswerten des Empfangssignals (E1 bis E9) im Hinblick auf ein Erkennen eines Überschreitens einer vordefinierten unteren Schwelle (2) durch eine Amplitude (A2, A3) des Empfangssignals (E1 bis E9),
wobei die Signalverarbeitungseinheit dazu ausgelegt ist, das Empfangssignal (E1 bis E9) dahingehend auszuwerten, ob seine Amplitude (A2, A3) unterhalb einer von der Amplitude (A1) des Sendesignals (S1, S2, S3, S4) abhängigen oberen Schwelle (1) liegt, und das Empfangssignal (E1 bis E9) als das von dem Objekt reflektierte Sendesignal (S1, S2, S3, S4) zum Detektieren des Objekts dann zu erkennen, wenn die Amplitude (A2, A3) des Empfangssignals (E1 bis E9) zwischen den beiden Schwellen (1, 2) liegt und wobei die obere Schwelle (1) einen sich über der Zeit zwischen dem Sendezeitpunkt (t_{S1}, t_{S2}) und dem Empfangszeitpunkt (t_{E1}, t_{E2}, t_{E3}) ändernden Verlauf (1) aufweist,
**dadurch gekennzeichnet, dass**
ein zeitlicher Verlauf (1) der oberen Schwelle ab dem Sendezeitpunkt (t_{S1}, t_{S2}) abhängig von der Frequenz des Sendesignals (S1, S2, S3, S4) festgelegt wird.

11. Fahrzeug, insbesondere Kraftwagen, mit einer Fahrerassistenzeinrichtung nach Anspruch 10.

## Claims

1. Method for detecting an object by means of a sensor operating according to the echo delay time principle in a driver assistance device, having the steps of:
- transmission of a transmission signal (S1, S2, S3, S4) having a prescribed amplitude (A1) and frequency by the sensor at a transmission time (t_{S1}, t_{S2}),
- reception of a received signal (E1 to E9) by the sensor at a later reception time (t_{E1}, t_{E2}, t_{E3}), and
- evaluation of the received signal (E1 to E9) with a view to recognizing when a predefined lower threshold (2) is exceeded by an amplitude (A2, A3) of the received signal (E1 to E9),
wherein
the received signal (E1 to E9) is evaluated to determine whether its amplitude (A2, A3) is below an upper threshold (1, L1, Aₘₐₓ) that is dependent on the amplitude (A1) of the transmission signal (S1, S2, S3, S4), wherein the received signal (E1 to E9) is recognized as the transmission signal (S1, S2, S3, S4) reflected by the object for the purpose of detecting the object when the amplitude (A2, A3) of the received signal (E1 to E9) is between the two thresholds (1, 2) and wherein the upper threshold (1) has a profile (1) that changes over time between the transmission time (t_{S1}, t_{S2}) and the reception time (t_{E1}, t_{E2}, t_{E3}), **characterized in that**
a time profile (1) of the upper threshold from the transmission time (t_{S1}, t_{S2}) onward is stipulated on the basis of the frequency of the transmission signal (S1, S2, S3, S4).

2. Method according to Claim 1,
**characterized in that**
the upper threshold (1) has a profile (1) that falls from the transmission time (t_{S1}, t_{S2}) onward.

3. Method according to either of the preceding claims,
**characterized in that**
a time profile (1) of the upper threshold from the transmission time (t_{S1}, t_{S2}) onward is stipulated on the basis of an attenuation of the transmission signal (S1, S2, S3, S4) in its propagation medium.

4. Method according to Claim 3,
**characterized in that**
the time profile (1) of the upper threshold from the transmission time (t_{S1}, t_{S2}) onward is stipulated in accordance with the shape of a time profile of the attenuation.

5. Method according to either of the preceding claims,
**characterized in that**
a time profile (1) of the upper threshold from the transmission time (t_{S1}, t_{S2}) onward is stipulated by taking into consideration losses on account of a reflection of the transmission signal (S1, S2, S3, S4) from an object.

6. Method according to one of the preceding claims,
**characterized in that**
at least two transmission signals are transmitted in succession and, for each transmission signal, a received signal (E7, E8, E9) is received by the sensor, wherein the received signals (E7, E8, E9) are recognized as the transmission signals reflected by the same object for the purpose of detecting the object when a predetermined difference criterion based on a difference between amplitudes (A) of the received signal (E7, E8, E9) is satisfied that comprises the difference being below a predetermined reference value.

7. Method according to one of the preceding claims,
**characterized in that**
when the received signal (E1 to E9) comprises a temporal sequence of pulses (3), an upper additional threshold (4) for a second and every further pulse (3) in the sequence of pulses (3) is stipulated on the basis of a captured amplitude (A) of a first pulse (3) in the sequence of pulses (3).

8. Method according to Claim 7,
**characterized in that**
the sequence of pulses (3) is recognized as the transmission signal (S1, S2, S3, S4) reflected by the same object for the purpose of detecting this object when a predetermined detection criterion based on the second and every further pulse (3) is satisfied that comprises the amplitude (A) of the second and every further pulse (3) being below the upper additional threshold (4).

9. Method according to one of the preceding claims,
**characterized in that**
the sensor is an ultrasonic sensor.

10. Driver assistance device for a vehicle, having:
- a sensor operating according to the echo delay time principle for transmitting a transmission signal (S1, S2, S3, S4) having a prescribed amplitude (A1) and frequency at a transmission time (t_{S1}, t_{S2}) and for receiving a received signal (E1 to E9) at a later reception time (t_{E1}, t_{E2}, t_{E3}), and
- a signal processing unit for evaluating the received signal (E1 to E9) with a view to recognizing when a predefined lower threshold (2) is exceeded by an amplitude (A2, A3) of the received signal (E1 to E9),
wherein the signal processing unit is designed to evaluate the received signal (E1 to E9) to determine whether its amplitude (A2, A3) is below an upper threshold (1) that is dependent on the amplitude (A1) of the transmission signal (S1, S2, S3, S4), and to recognize the received signal (E1 to E9) as the transmission signal (S1, S2, S3, S4) reflected by the object for the purpose of detecting the object when the amplitude (A2, A3) of the received signal (E1 to E9) is between the two thresholds (1, 2), and wherein the upper threshold (1) has a profile (1) that changes over time between the transmission time (t_{S1}, t_{S2}) and the reception time (t_{E1}, t_{E2}, t_{E3}),
**characterized in that**
a time profile (1) of the upper threshold from the transmission time (t_{S1}, t_{S2}) onward is stipulated on the basis of the frequency of the transmission signal (S1, S2, S3, S4).

11. Vehicle, particularly a motor vehicle, having a driver assistance device according to Claim 10.

## Revendications

1. Procédé de détection d'un objet au moyen d'un capteur fonctionnant selon le principe du temps de propagation des échos d'un dispositif d'aide à la conduite, comprenant les étapes consistant à :
- émettre un signal d'émission (S1, S2, S3, S4) ayant une amplitude (A1) et une fréquence prédéterminées au moyen du capteur à un instant d'émission (tₛ₁, tₛ₂),
- recevoir un signal de réception (E1 à E9) au moyen du capteur à un instant de réception ultérieur (t_{E1}, t_{E2}, t_{E3}), et
- évaluer le signal de réception (E1 à E9) du point de vue d'une identification du dépassement d'un seuil inférieur prédéfini (2) par une amplitude (A2, A3) du signal de réception (E1 à E9),
dans lequel le signal de réception (E1 à E9) est évalué pour déterminer si son amplitude (A2, A3) se situe en dessous d'un seuil supérieur (1, L1, Aₘₐₓ) dépendant de l'amplitude (A1) du signal d'émission (S1, S2, S3, S4), dans lequel le signal de réception (E1 à E9) n'est identifié comme étant le signal d'émission (S1, S2, S3, S4) réfléchi par l'objet pour la détection de l'objet que lorsque l'amplitude (A2, A3) du signal de réception (E1 à E9) se situe entre les deux seuils (1, 2) et dans lequel le seuil supérieur (1) présente une évolution (1) variant au cours du temps entre l'instant d'émission (tₛ₁, tₛ₂) et l'instant de réception (t_{E1}, t_{E2}, t_{E3}),
**caractérisé en ce qu'**une évolution temporelle (1) du seuil supérieur à partir de l'instant d'émission (tₛ₁, tₛ₂) est établie en fonction de la fréquence du signal d'émission (S1, S2, S3, S4).

2. Procédé selon la revendication 1,
**caractérisé en ce que** le seuil supérieur (1) présente une évolution (1) décroissant à partir de l'instant d'émission (tₛ₁, tₛ₂).

3. Procédé selon l'une quelconque des revendications précédentes,
**caractérisé en ce qu'**une évolution temporelle (1) du seuil supérieur à partir de l'instant d'émission (tₛ₁, tₛ₂) est établie en fonction d'un affaiblissement du signal d'émission (S1, S2, S3, S4) dans son milieu de propagation.

4. Procédé selon la revendication 3,
**caractérisé en ce que** l'évolution temporelle (1) du seuil supérieur à partir de l'instant d'émission (tₛ₁, tₛ₂) est établie d'une manière qui correspondant à la forme d'une évolution temporelle de l'affaiblissement.

5. Procédé selon l'une quelconque des revendications précédentes,
**caractérisé en ce qu'**une évolution temporelle (1) du seuil supérieur à partir de l'instant d'émission (tₛ₁, tₛ₂) est établie en tenant compte des pertes dues à une réflexion du signal d'émission (S1, S2, S3, S4) sur un objet.

6. Procédé selon l'une quelconque des revendications précédentes,
**caractérisé en ce qu'**au moins deux signaux d'émission sont émis les uns à la suite des autres et **en ce que**, pour chaque signal d'émission, un signal de réception (E7, E8, E9) est reçu au moyen du capteur, dans lequel les signaux de réception (E7, E8, E9) ne sont identifiés comme étant les signaux d'émission réfléchis par le même objet pour la détection de l'objet que lorsqu'un critère de différence prédéterminé concernant une différence entre les amplitudes (A) des signaux de réception (E7, E8, E9) est satisfait, lequel critère comprend le fait que la différence se situe en dessous d'une valeur de référence prédéterminée.

7. Procédé selon l'une quelconque des revendications précédentes,
**caractérisé en ce qu'**un seuil supérieur supplémentaire (4) destiné à une deuxième impulsion et à chaque autre impulsion (3) de la séquence d'impulsions (3) n'est établi en fonction d'une amplitude détectée (A) d'une première impulsion (3) de la séquence d'impulsions (3) que lorsque le signal de réception (E1 à E9) comprend une séquence temporelle d'impulsions (3).

8. Procédé selon la revendication 7,
**caractérisé en ce que** la séquence d'impulsions (3) n'est identifiée comme étant le signal d'émission (S1, S2, S3, S4) réfléchi par le même objet pour la détection dudit objet que lorsqu'un critère de détection prédéterminé concernant la deuxième impulsion et chaque autre impulsion (3) est satisfait, lequel critère comprend le fait que l'amplitude (A) de la deuxième impulsion et de chaque autre impulsion (3) se situe en dessous du seuil supplémentaire supérieur (4).

9. Procédé selon l'une quelconque des revendications précédentes, **caractérisé en ce que** le capteur est un capteur à ultrasons.

10. Dispositif d'aide à la conduite destiné à un véhicule, comportant :
- un capteur fonctionnant selon le principe du temps de propagation des échos pour émettre un signal d'émission (S1, S2, S3, S4) d'amplitude (A1) et de fréquence prédéterminées à un instant d'émission (tₛ₁, tₛ₂) et pour recevoir un signal de réception (E1 à E9) à un instant de réception ultérieur (t_{E1}, t_{E2}, t_{E3}), et
- une unité de traitement du signal pour évaluer le signal de réception (E1 à E9) du point de vue de l'identification d'un dépassement d'un seuil inférieur prédéfini (2) par une amplitude (A2, A3) du signal de réception (E1 à E9),
dans lequel l'unité de traitement du signal est conçue de manière à évaluer le signal de réception (E1 à E9) pour déterminer si son amplitude (A2, A3) se situe en dessous d'un seuil supérieur (1) dépendant de l'amplitude (A1) du signal d'émission (S1, S2, S3, S4), et pour n'identifier le signal de réception (E1 à E9) comme étant le signal d'émission (S1, S2, S3, S4) réfléchi par l'objet pour la détection de l'objet que lorsque l'amplitude (A2, A3) du signal de réception (E1 à E9) se situe entre les deux seuils (1, 2) et dans lequel le seuil supérieur (1) présente une évolution (1) variant au cours du temps entre l'instant d'émission (tₛ₁, tₛ₂) et l'instant de réception (t_{E1}, t_{E2}, t_{E3}),
**caractérisé en ce qu'**une évolution temporelle (1) du seuil supérieur à partir de l'instant d'émission (tₛ₁, tₛ₂) est établie en fonction de la fréquence du signal d'émission (S1, S2, S3, S4).

11. Véhicule, notamment véhicule à moteur, comportant un dispositif d'aide à la conduite selon la revendication 10.
